# EUROPÄISCHE PATENTSCHRIFT

(11) **EP 4 013 571 B1**
(45) Veröffentlichungstag und Bekanntmachung des Hinweises auf die Patenterteilung: **16.10.2024**
(21) Anmeldenummer: 20734530.7
(22) Anmeldetag: 23.06.2020
(51) Int. Cl.: B25F 5/02, F24H 3/04

(54) **ELEKTRISCHES, PISTOLENARTIGES HANDGERÄT**
ELECTRICAL, PISTOL-LIKE HANDHELD TOOL
APPAREIL À MAIN ÉLECTRIQUE DE TYPE PISTOLET

(30) Priorität: 01.10.2019 DE 102019126493
(43) Veröffentlichungstag der Anmeldung: 22.06.2022
(73) Patentinhaber: Steinel GmbH, 33442 Herzebrock-Clarholz (DE)
(72) Erfinder: ALBRI, Frank, 33442 Herzebrock-Clarholz (DE)
(74) Vertreter: Mathys & Squire
(86) Internationale Anmeldenummer: PCT/EP2020/067535
(87) Internationale Veröffentlichungsnummer: WO 2021/063553

(56) Entgegenhaltungen:
- EP-A1- 2 884 515
- EP-A2- 0 048 124
- DE-A1- 102006 060 880
- DE-A1- 102012 223 931
- DE-A1- 102015 225 723
- DE-A1- 102016 012 204
- DE-U1- 8 714 271
- US-A- 4 296 290
- US-A- 5 195 164
- US-A1- 2005 205 406
- US-A1- 2013 205 538
- US-B1- 6 812 425

## Beschreibung

Die Erfindung betrifft ein elektrisches, pistolenartiges Handgerät, insbesondere ein akkubetriebenes, pistolenartiges Handgerät.

Elektrische, pistolenartige Handgeräte, insbesondere akkubetriebene pistolenartige Handgeräte finden bei handwerklichen Arbeiten eine Vielzahl von Anwendungen. So findet ein elektrisches, pistolenartiges Handgerät beispielsweise eine Anwendung als Akku-Schrauber, Bohrmaschine, Bohrhammer, oder selbst als Bohrmeißel. Eine weitere Anwendung für elektrische pistolenartige Handgeräte oder insbesondere akkubetriebene pistolenartige Handgeräte ist der Einsatz als Heißluftgebläse, welches auch Heißpistole oder Heatgun genannt wird. Noch eine weitere Anwendung liegt in dem Einsatz des elektrischen, pistolenartigen Handgeräts als Heißklebepistole. Allen diesen genannten elektrischen, pistolenartigen Handgeräten ist gemeinsam, dass sie einen Gerätekörper zur elektrisch aktivierten Bearbeitung eines Werkstücks (mechanisch oder auch mit Heißluft) sowie einen Griffteil aufweisen, der mit dem Gerätekörper pistolenartig gewinkelt verbunden ist.

Durch die Formgebung eines solchen Handgeräts in Form einer Pistole wird eine ergonomische und kraftschonende Bearbeitung von Werkstücken ermöglicht. Bei einem akkubetriebenen pistolenartigen Handgerät wird in der Regel ein elektrisches Akkumulator-Modul an der Unterseite des Griffteils lösbar befestigt, um das Handgerät mit elektrischer Energie zu versorgen. Durch die Anordnung des elektrischen Akkumulator-Moduls an der Unterseite des Griffteils zeigt aufgrund des nicht zu vernachlässigenden Gewichts des Akkumulator-Moduls der Griffteil bei einem Greifen des Handgeräts durch einen Benutzer in der Regel lotartig mit seiner Griffachse nach unten. Dies wird auch noch dadurch unterstützt, dass bei einem Arbeitsvorgang das elektrische Handgerät in der Regel auf dem Akkumulator-Modul abgestellt wird, so dass der Griffteil mit seiner Griffteilachse entlang der Schwerkraftrichtung zeigt.

Ein solches elektrisches, pistolenartiges Handgerät wird in der Regel mittels einer Betätigungsvorrichtung manuell aktiviert und/oder deaktiviert, wobei die Betätigungsvorrichtung hierbei, ähnlich wie bei einer Pistole, als Betätigungstastschalter in einem Bereich des Griffteils vorgesehen ist, in welchem eine Aktivierung durch einen Zeigefinger einer Benutzerhand wie bei einer Betätigung eines Waffenabzugs erfolgen kann. Diese intuitive Bedienungsart eines pistolenartigen Handgeräts wird besonders bei Handgeräten eingesetzt, bei welchen eine schnelle Aktivierung / Deaktivierung durch den Benutzer erfolgen soll. Dies ist insbesondere vorteilhaft bei einem akkubetrieben Heißluftgebläse, bei welchem durch eine schnelle Aktivierung / Deaktivierung des Heißluftgebläses der Stromverbrauch reduziert und somit die Akkulaufzeit erhöht werden kann.

Gerade bei Heißluftpistolen besteht jedoch die Gefahr, dass durch eine unbeabsichtigte Betätigung der Betätigungsvorrichtung das Heißluftgebläse aktiviert wird. Speziell in einem Lieferwagen oder in einer Werkstatt kann es durch ein Umkippen eines solchen Handgeräts oder ein Umfallen in einem Lieferwagen durch eine Aktivierung des Heißluftgebläses zu gefährlichen Situationen kommen, da die Betriebstemperatur von handwerklich eingesetzten Heißluftgebläsen bis zu 700 °C sein kann. Aber auch bei motorisierten Handwerkzeugen kann eine unbeabsichtigte Betätigung einen Schaden an dem Gerät selbst, seiner unmittelbaren Umgebung oder schlimmstenfalls zur Verletzung von Personen führen.

Daher wird in der Regel bei potenziell gefährlichen pistolenartigen Handgeräten zusammen mit einer Betätigungsvorrichtung eine Entriegelungsvorrichtung vorgesehen, mit welcher die Betätigungsvorrichtung manuell entriegelt und/oder verriegelt werden kann.

Bisherige Lösungen sehen hier einen mit dem Daumen zu betätigenden Schalter vor, der eingedrückt oder nach unten gedrückt wird, um die Betätigungsvorrichtung wie einen Betätigungstastschalter zu entriegeln. Je nach Handposition und Größe der Benutzerhand sind diese jedoch schwer zu erreichen oder nur durch eine unbequeme Handposition zu betätigen. Oftmals wird durch das während des gesamten Betriebsvorgangs erfolgte Drücken des Daumens auf den Entriegelungsschalter die Handauflagefläche auf der gegenüber liegenden Seite ebenfalls aufgrund eines Vorsehens einer Gegenkraft mit Druck beaufschlagt, was bei längerer Verwendung unbequem ist. Viele der bekannten Mechaniken benötigen mehrere mechanische Teile und bieten somit auch mehr Raum für potentielle Fehler. Hierdurch werden auch höhere Material-, Herstell- und Montagekosten verursacht.

DE102012223931A1 offenbart den Oberbegriff des Anspruches 1.

Andere Beispiele von Handwerkzeugen sind aus der EP0048124A2, DE102015225723A1 oder US2013/205538A1 bekannt.

Der Erfindung liegt demnach die Aufgabe zugrunde, ein elektrisches, pistolenartiges Handgerät, insbesondere ein akkubetriebenes Handgerät vorzusehen, welches in ergonomischer und einfacher Weise für einen Handgerätebetrieb entriegelt werden kann.

Diese Aufgabe wird durch das elektrische, pistolenartige Handgerät nach Anspruch 1 gelöst. Vorteilhafte Ausgestaltungen und Weiterbildungen der Erfindung sind in den Unteransprüchen angegeben.

Erfindungsgemäß ist ein elektrisches, pistolenartiges Handgerät vorgesehen, welches einen Gerätekörper zur elektrisch aktivierten Bearbeitung eines Werkstücks, einen Griffteil, der mit dem Gerätekörper gewinkelt verbunden ist, eine Betätigungsvorrichtung zur manuellen Aktivierung und/oder Deaktivierung des Handgeräts, die an dem Gerätekörper oder dem Griffteil angeordnet ist und eine Entriegelungsvorrichtung zur manuellen Entriegelung und/oder Verriegelung der Betätigungsvorrichtung umfasst. Hierbei ist die Entriegelungsvorrichtung so an dem Gerätekörper oder dem Griffteil angeordnet, dass eine Entriegelung durch ein Abstützen des Handgeräts im stabilen Gleichgewicht auf einem der Finger einer Benutzerhand beim Greifen des Griffteils durch einen Benutzer erfolgt.

Erfindungsgemäß wird also eine Sicherheitsverriegelung vorgesehen, die ohne Mehraufwand und ohne dass ein Verwender zusätzliche Bewegungen macht, die Verwendung des Handgerätes ermöglicht. Dabei wird gleichzeitig ein versehentliches Einschalten des Gerätes bei einem Umfallen oder in einer möglichen Aufbewahrung in einem Lieferwagen oder in einem Lagerraum verhindert. Die Sicherheitsverriegelung wird dabei in einer Achse betätigt, die sich von der Bewegungsachse der Betätigungsvorrichtung oder eines Ein-/Ausschalters unterscheidet, um eine unbeabsichtigte Betätigung der Betätigungsvorrichtung oder des Ein-/Ausschalters so unwahrscheinlich wie möglich zu machen. Darüber hinaus weist das erfindungsgemäß elektrische, pistolenartige Handgerät den Vorteil auf, dass es sich sowohl bei Arbeiten mit der linken als auch mit der rechten Hand optimal bedienen und entriegeln lässt.

Wie in Anspruch 1 dargestellt, weist das Handgerät ferner einen Abstützdorn auf, der von dem Fingergriffbereich des Griffteils nach vorne ragt und an seiner Unterseite die Entriegelungsvorrichtung aufweist, wobei die Entriegelung durch ein Abstützen des Abstützdorns auf einem der Finger der Benutzerhand erfolgt.

Um ein Abrutschen des Handgerätes von dem entriegelnden Finger zu erschweren oder zu verhindern, kann der Abstützdorn an seiner Unterseite konkav zur zumindest teilweise umschließenden Aufnahme des entriegelnden Fingers entgegen der Schwerkraftrichtung ausgebildet sein. Somit rutscht also bei einem Entriegelungsvorgang das pistolenartige Handgerät, das auf dem entriegelnden Finger im stabilen Gleichgewicht ausbalanciert ist, nicht von dem entriegelnden Finger.

Um eine einfache Bauweise der Betätigungsvorrichtung des Handgeräts zu erreichen, ist es von Vorteil, wenn die Betätigungsvorrichtung einen elektrischen Betätigungstastschalter umfasst, der durch eine Aktivierungskraft gegen eine Rückstellkraft quer zur Griffachse des Griffteils durch einen der Finger der Benutzerhand betätigt wird.

Um in ähnlicher Weise eine wie bei der Betätigungsvorrichtung einfache Bauweise der Entriegelungsvorrichtung vorzusehen, ist es zweckmäßig, wenn die Entriegelungsvorrichtung einen elektrischen Entriegelungstastschalter umfasst, der durch eine Abstützkraft gegen die Schwerkraft entlang der Griffachse des Griffteils durch einen der Finger der Benutzerhand betätigt wird.

Gemäß einer Weiterbildung der Erfindung ist es jedoch auch von Vorteil, wenn die Betätigungsvorrichtung einen Betätigungs-Berührungssensor umfasst, der durch eine Berührung des Betätigungs-Berührungssensors in einer Richtung quer zur Griffachse des Griffteils durch einen der Finger der Benutzerhand betätigt wird.

Hierbei kann zweckmäßigerweise auch die Entriegelungsvorrichtung einen Entriegelungs-Berührungssensor umfassen, der durch eine Berührung des Entriegelungs-Berührungssensors in einer Richtung entlang der Griffachse des Griffteils durch einen der Finger der Benutzerhand betätigt wird.

Für eine besonders einfache, kompakte und stabile Bauweise des erfindungsgemäßen Handgeräts ist es zweckmäßig, wenn die Entriegelungsvorrichtung einen mechanischen Entriegelungsmechanismus umfasst, der durch eine Abstützkraft gegen die Schwerkraft entlang der Griffachse des Griffteils durch einen der Finger der Benutzerhand die Betätigungsvorrichtung mechanisch entriegelt.

Hierbei kann der mechanische Entriegelungsmechanismus in zweckmäßiger Weise eine Entriegelungswippe aufweisen, welche durch eine an ihrem ersten Ende verbundene Rückstellfeder in einer Verriegelungsstellung gehalten wird, wobei das zweite Ende der Entriegelungswippe eine Betätigung der Betätigungsvorrichtung blockiert.

Dabei ist es von Vorteil, wenn das zweite Ende der Entriegelungswippe U-förmig ausgebildet ist, wobei bei einer Entriegelung ein Tastenteil der Betätigungsvorrichtung mittig im U-förmigen Ende der Entriegelungswippe geführt wird und bei einer Verriegelung das Tastenteil auf ein Sperrelement am U-förmigen Ende der Entriegelungswippe stößt.

Um eine möglichst intuitive Bedienung des elektrischen, pistolenartigen Handgeräts zu ermöglichen, ist es von Vorteil, wenn die Betätigungsvorrichtung so an dem Griffteil oder dem Gerätekörper vorgesehen ist, dass die Betätigung mittels eines Zeigefingers der Benutzerhand erfolgt.

Für eine besonders einfache Umsetzung der Erfindung, insbesondere bei einem Vorsehen eines Abstützdorns am vorderen Teil des Griffteils ist es von Vorteil, wenn die Entriegelungsvorrichtung so an dem Griffteil oder dem Gerätekörper vorgesehen ist, dass die Entriegelung mittels eines Mittelfingers der Benutzerhand erfolgt.

Erfindungsgemäß kann die Entriegelungsvorrichtung und die Betätigungsvorrichtung so symmetrisch an einem Griffteil oder dem Gerätekörper vorgesehen sein, dass eine Entriegelung und eine Betätigung in gleicher Weise mittels einer rechten oder linken Benutzerhand durchführbar sind. Somit lässt sich erfindungsgemäß sowohl mit der linken als auch mit der rechten Hand optimal arbeiten, ohne dass ein Nachteil bei einem Handwechsel entsteht. Darüber hinaus ist das Gerät in gleicher Weise für Rechtshänder und Linkshänder einfach zu bedienen und einfach zu entriegeln.

In einer besonders vorteilhaften Ausgestaltung als akkubetriebenes Handgerät ist es zweckmäßig, wenn der Griffteil an seinem dem Gerätekörper abgewandten, unteren Ende lösbar mit einem elektrischen Akkumulator-Modul zur Versorgung des Handgeräts mit elektrischer Energie verbindbar ist.

Insbesondere ist es erfindungsgemäß vorgesehen, dass das Handgerät als Heißpistole eingesetzt wird, wobei der Gerätekörper ein Heißluftgebläse aufweist.

Die Erfindung wird im Folgenden beispielsweise anhand der Zeichnungen näher erläutert. Es zeigen:
Fig. 1 eine schematische Ansicht eines elektrischen, pistolenartigen Handgeräts gemäß einem Ausführungsbeispiel der Erfindung,
Fig. 2 eine schematische Ansicht eines Handgeräts gemäß einem weiteren Ausführungsbeispiel der Erfindung,
Fig. 3 eine schematische Ansicht eines Handgeräts gemäß noch einem weiteren Ausführungsbeispiel der Erfindung,
Fig. 4 eine schematische perspektivische Ansicht eines Handgeräts gemäß einem Ausführungsbeispiel der Erfindung,
Fig. 5 eine schematische Ansicht eines mechanischen Entriegelungsmechanismus und einer Betätigungsvorrichtung gemäß einem Ausführungsbeispiel der Erfindung, und
Fig. 6 eine schematische Ansicht eines als Heißluftpistole ausgebildeten Handgeräts gemäß einem Ausführungsbeispiel der Erfindung.

In den verschiedenen Figuren der Zeichnungen sind einander entsprechende Bauelemente mit gleichen Bezugszeichen versehen.

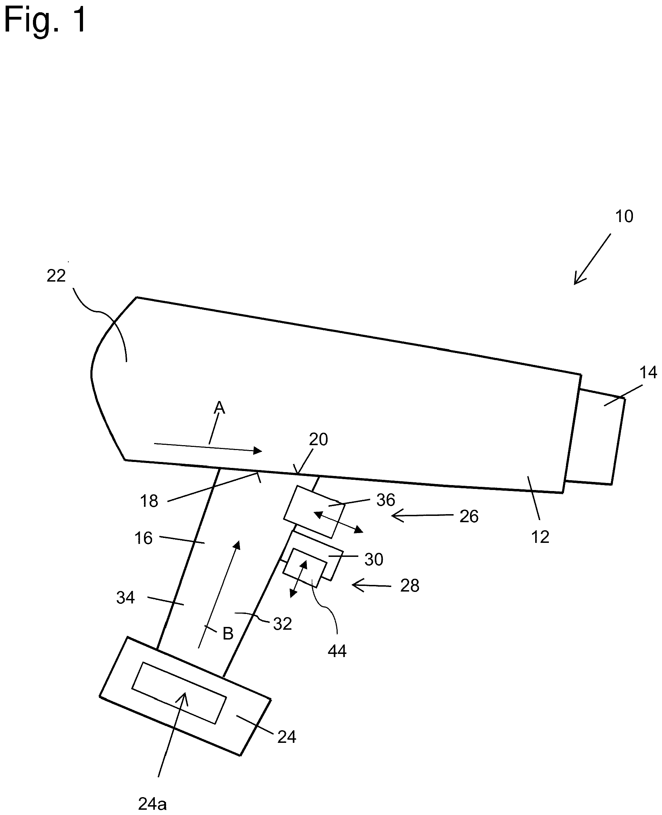

Fig. 1 zeigt eine schematische und vereinfachte Ansicht eines elektrischen, pistolenartigen und insbesondere akkubetrieben Handgeräts 10 gemäß einem Ausführungsbeispiel der Erfindung.

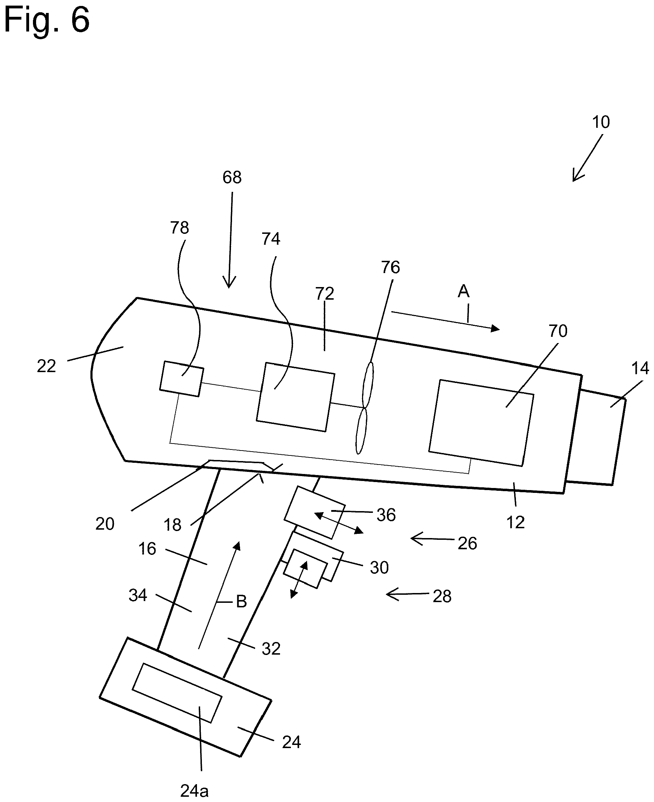

Das in Fig. 1 dargestellte Handgerät 10 weist einen Gerätekörper 12 auf, mittels dessen ein Werkstück elektrisch aktiviert bearbeitet werden kann. Hierbei ist die Erfindung nicht auf den Einsatz des elektrischen, pistolenartigen Handgeräts als Heißluftpistole (wie mit Bezug auf Fig. 6 noch genauer beschrieben werden wird) eingeschränkt, sondern kann eine Vielzahl von Verwendungen bereitstellen. So ist es beispielsweise möglich, dass das erfindungsgemäße elektrische, pistolenartige Handgerät ein Akku-Schrauber, eine Bohrmaschine (akkubetrieben oder kabelgebunden), eine Heißklebepistole, eine Fräs-Vorrichtung, eine Löt-Vorrichtung, eine Schweiß-Vorrichtung, ein Bolzen-Schweißgerät oder generell ein Handgerät ist, das aufgrund eines gefahrvollen Betriebs bei einer Bearbeitung eines Werkstücks einen Verriegelungsmechanismus oder Sicherungsmechanismus benötigt.

Der Gerätekörper 12 ist vorzugsweise als langgestreckt ausgebildetes Gehäuse vorgesehen, wobei an dessen Vorderseite oder distalen Ende des Gerätekörpers 12 ein Werkstückbearbeitungsbereich 14 vorgesehen sein kann. Dies kann bei dem in Fig. 6 gezeigten Ausführungsbeispiel als Heißluftgebläse beispielsweise ein Luftauslass für Heißluft sein. Es ist jedoch auch vorstellbar, dass der Werkstückbearbeitungsbereich 14 beispielsweise als Bohrfutter vorgesehen ist, in welchem ein Bohrwerkzeug aufgenommen werden kann. Der langgestreckt ausgebildete Gerätekörper 12 erstreckt sich entlang einer Längsrichtung A.

Das Handgerät 10 weist ferner einen Griffteil 16 auf, welcher mit dem Gerätekörper 12 gewinkelt verbunden ist. Der Griffteil 16 erstreckt sich entlang einer Griffachse B, so dass die Längsrichtung A und die Griffachse B zueinander so gewinkelt angeordnet sind, dass sie in einem Winkel von 70 ° bis 110 °, oder 80 ° bis 100 °, oder insbesondere im Wesentlichen senkrecht zueinander stehen. Der Griffteil 16 ist also mit seinem ersten, oberen Ende 18 mit einem rückseitigen unteren Bereich 20 des Gerätekörpers 12 verbunden. Auch wenn das pistolenartige Handgerät 10 bei einem Bearbeitungsvorgang in unterschiedlichen Lagen zur Schwerkraftrichtung gehalten werden kann, beziehen sich die Begriffe oben und unten auf eine Lage des Handgeräts 10, in welchem der Griffteil 16 mit seiner Griffachse B im Wesentlichen parallel zur Schwerkraftrichtung ausgerichtet ist, wobei der Gerätekörper 12 über dem Griffteil 16 angeordnet ist. Hierbei verläuft die Längsrichtung A des Gerätekörpers 12 im Wesentlichen senkrecht zur Schwerkraftrichtung und im Wesentlichen parallel zu einer Horizontalen. Des Weiteren fällt ein vorderer Bereich des Handgeräts 10 mit dem Werkstückbearbeitungsbereich 14 und ein hinterer Bereich oder rückseitiger Bereich 22 des Gerätekörpers 12 mit einem Bereich zusammen, in welchem der Griffteil 16 vorgesehen ist und welcher einem Benutzer zugewandt ist.

Die erfindungsgemäße Entriegelung des Handgeräts 10 wird in besonders vorteilhafter Weise durch das Vorsehen eines Akkumulator-Moduls 24 unterstützt, das mit dem Griffteil 16 an dessen dem Gerätekörper 12 abgewandten, unteren zweiten Ende lösbar verbindbar ist und zur Versorgung des Handgeräts 10 mit elektrische Energie vorgesehen ist. Das Akkumulator-Modul 24 ist in bekannter Weise an der Unterseite des pistolenförmigen Griffteils 16 des Handgriffs 10 angebracht, bzw. eingerastet.

Das Akkumulator-Modul 24 weist elektrische Speichermittel 24a auf, welche vorzugsweise als elektrische Akkumulatoren ausgebildet sind. Als elektrischer Ackumulator 24a kann hierbei ein Lithium-Ionen-Akku vorgesehen werden, welcher auf eine Betriebsspannung von 18 V eingerichtet sein kann. Durch das Vorsehen des Akkumulator-Moduls 24 als Stromversorgung können Betriebsleistungen für das Handgerät 10 im Bereich von 600 W bis 1200 W vorgesehen werden. Durch das Vorsehen des Akkumulator-Moduls 24 an der Unterseite des Griffteils 16 richtet sich der Griffteil 16 mit seiner Griffachse B lotartig, also parallel zur Schwerkraftrichtung, aus, wodurch die im Folgenden beschriebene erfindungsgemäße Entriegelung des Handgeräts 10 ermöglicht oder zumindest erleichtert wird.

So weist das elektrische, pistolenartige Handgerät 10 zur manuellen Aktivierung und/oder Deaktivierung des Handgeräts 10 eine Betätigungsvorrichtung 26 auf, die an dem Gerätekörper 12 oder dem Griffteil 16 angeordnet sein kann. In dem in Fig. 1 gezeigten Ausführungsbeispiel ist die Betätigungsvorrichtung 26 an dem Griffteil 16 angeordnet, es ist jedoch auch vorstellbar, dass die Betätigungsvorrichtung 26 am Gerätekörper 12 vorgesehen ist.

Des Weiteren weist das Handgerät 10 erfindungsgemäß eine Entriegelungsvorrichtung 28 auf, mittels derer die Betätigungsvorrichtung 26 manuell entriegelt und/oder verriegelt werden kann. Wie beispielsweise in Fig. 1 gezeigt, ist die Entriegelungsvorrichtung 28 erfindungsgemäß so an dem Gerätekörper 12 oder dem Griffteil 16 angeordnet, dass eine Entriegelung durch ein Abstützen des Handgeräts 12 im stabilen Gleichgewicht auf einem der Finger einer Benutzerhand (nicht gezeigt) beim Greifen des Griffteils 16 durch einen Benutzer erfolgt. Erfindungsgemäß ist also die Gewichtsverteilung des Handgeräts 10 so beschaffen, dass durch das Gewicht des Akkumulator-Moduls 24 bei einem Greifen des Griffteils 16 durch einen Benutzer mittels einer Benutzerhand einer der Finger der Benutzerhand, beispielsweise der Mittelfinger am Griffteil 16 nach oben rutscht und dabei gegen die Entriegelungsvorrichtung 28 stößt, wodurch bei einem Ergreifen des Handgeräts 10 eine Entriegelung des Handgeräts 10 ausgelöst wird. In besonders vorteilhafter Weise liegt dabei das Handgerät 10 ausbalanciert in einem stabilen Gleichgewicht mit der Entriegelungsvorrichtung 28 auf einem der Finger der Benutzerhand und wird durch diesen Finger im Gleichgewicht getragen oder abgestützt, wobei durch die entsprechende Stützkraft die Entriegelungsvorrichtung 28 betätigt wird.

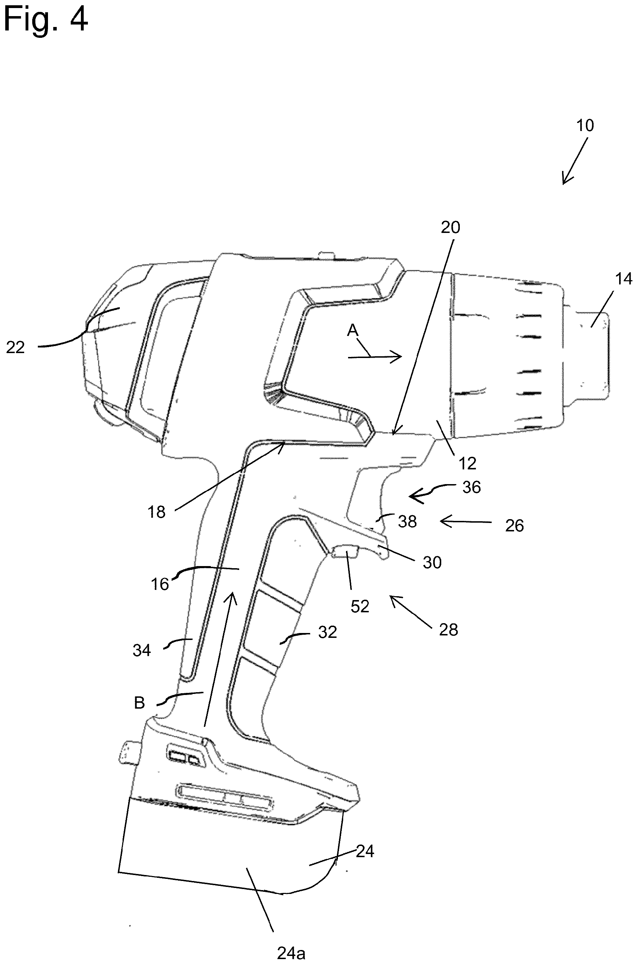

Gemäß einem weiteren vorteilhaften Ausführungsbeispiel der Erfindung weist das Handgerät 10 einen Abstützdorn 30 auf, der von einem Fingergriffbereich 32 des Griffteils 16 nach vorne, also in Richtung des Werkstückbearbeitungsbereichs 14 des Handgeräts 10 ragt und an seiner Unterseite, also der dem Akkumulator-Modul 24 zugewandten Seite, die Entriegelungsvorrichtung 28 aufweist, wobei die Entriegelung durch ein Abstützen des Abstützdorns 30 auf einem der Finger der Benutzerhand erfolgt. Wie beispielsweise in der perspektivischen Ansicht des Griffteils 16 in Fig. 4 ersichtlich, kann dabei der Abstützdorn 30 an seiner Unterseite konkav zur zumindest teilweise umschließenden Aufnahme des entriegelnden Fingers entgegen der Schwerkraftrichtung ausgebildet sein. Der Fingergriffbereich 32 des Griffteils 16 ist ein Bereich, in welchem bei einer Benutzung des Handgeräts 10 die Finger einer Benutzerhand zum Liegen kommen. Dieser Fingergriffbereich 32 liegt dabei auf der gegenüberliegenden Seite eines Handballengriffbereichs 34 des Griffteils 16. Wie weiter aus Fig. 4 ersichtlich ist, wird durch den halbmond-förmigen Abstützdorn 30 ein Abrutschen des Handgeräts 10 von dem entriegelnden Finger, auf welchem bei einem Greifen der Handgriff 10, in stabilem Gleichgewicht ausbalanciert, zum Liegen kommt. Ferner kann der Abstützdorn 30 so am Griffteil 16 vorgesehen sein, dass die Betätigungsvorrichtung 26, insbesondere ein Tastschalter, zwischen dem Gerätekörper 12 und dem Abstützdorn 30 angeordnet ist. Somit wird sichergestellt, dass eine unbeabsichtigte Betätigung nicht durch den Zeigefinger eines Benutzers selbst bei einer Entriegelung erschwert oder verhindert wird.

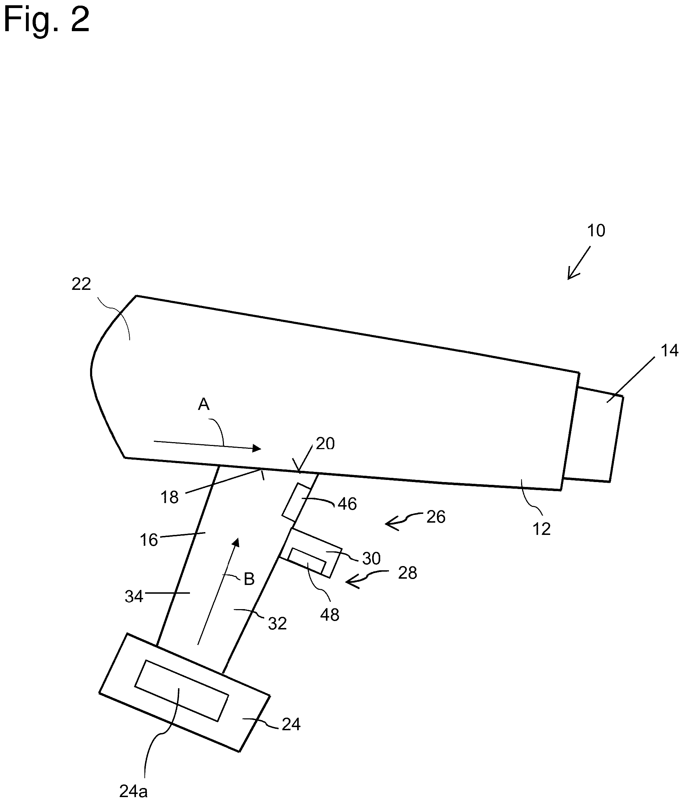

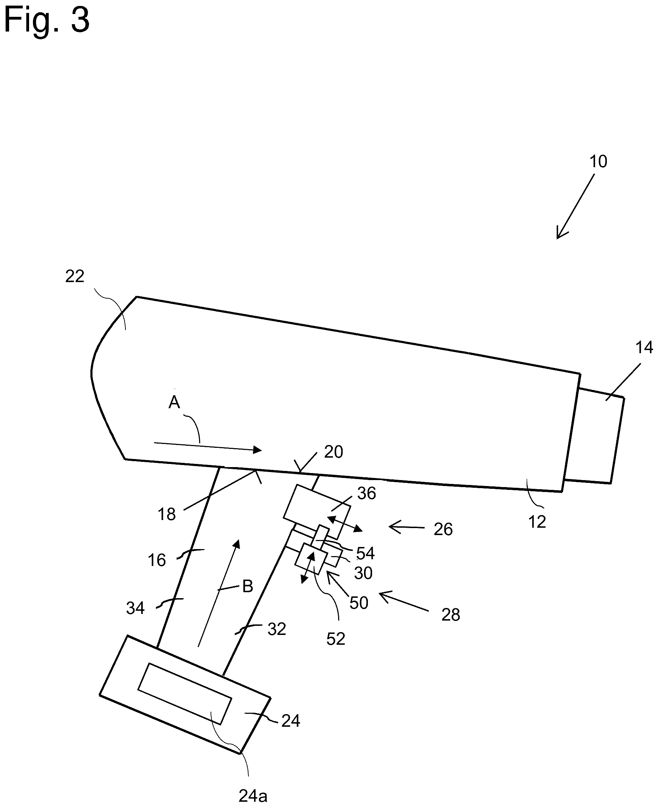

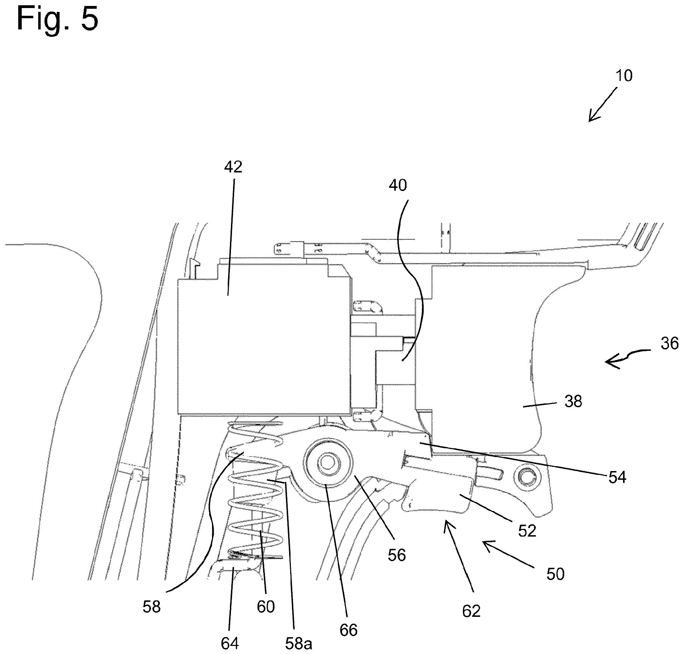

Der technische Begriff Entriegelungsvorrichtung soll ganz allgemein dahingehend verstanden werden, dass durch eine wie auch immer geartete Betätigung der Entriegelungsvorrichtung 28 eine Sperrung der Betätigungsvorrichtung 26 aufgehoben wird. Diese Entsperrung der Betätigungsvorrichtung 26 kann beispielsweise elektrisch durch das Vorsehen von Tastschaltern für die Betätigungsvorrichtung 26 und die Entriegelungsvorrichtung 28 (wie in Fig. 1 gezeigt), elektronisch durch das Vorsehen von Berührungs-Sensoren (wie beispielsweise in Fig. 2 gezeigt) oder auch mechanisch durch das Vorsehen eines Entriegelungsmechanismus (wie beispielsweise in Fig. 3 und Fig. 5 gezeigt) erfolgen. Die Entriegelungsvorrichtung 28 kann somit auch als Entsperreinheit, Einschaltsperreinheit, oder einfach als Sperreinheit bezeichnet werden.

Gemäß dem Ausführungsbeispiel in Fig. 1 umfasst die Betätigungsvorrichtung 26 einen elektrischen Betätigungstastschalter 36, der durch eine Aktivierungskraft gegen eine Rückstellkraft quer zur Griffachse B des Griffteils 16 durch einen der Finger der Benutzerhand betätigt wird. Dabei ist die Betätigungsvorrichtung 26 vorteilhafterweise so an dem Griffteil 16 oder dem Gerätekörper 12 vorgesehen, dass die Betätigung mittels eines Zeigefingers der Benutzerhand erfolgt.

Der elektrische Betätigungstastschalter 36 ist genauer in Fig. 5 gezeigt. So weist der Betätigungstastschalter 36 ein Tastenelement 38 auf, welches über ein Kolbenelement 40 mit einem Betätigungsschaltteil 42 verbunden ist und durch das Kolbenelement 40 linear zwischen einer Aus-Stellung und einer An-Stellung linear geführt wird. Mit anderen Worten wird durch das Drücken des Tastenelements 38 das Kolbenelement 40 in das Schaltteil 42 hineingeführt und löst dort einen elektrischen Schaltvorgang oder abhängig von einer graduellen Eindrücktiefe einen Potentiometer-Vorgang aus. Das Kolbenelement 40 wird dabei entgegen der Tastendruck-Richtung beispielsweise durch eine Rückstellfeder in eine Aus-Stellung bewegt und in dieser gehalten.

In dem in Fig. 1 gezeigten Ausführungsbeispiel umfasst die Entriegelungsvorrichtung 28 einen elektrischen Entriegelungstastschalter 44, der durch eine Abstützkraft gegen die Schwerkraft entlang der Griffachse B des Griffteils 16 durch einen der Finger der Benutzerhand betätigt wird. Hierbei ist in besonders vorteilhafter Weise die Entriegelungsvorrichtung 28 so an dem Griffteil 16 oder dem Gerätekörper 12 vorgesehen, dass die Entriegelung mittels eines Mittelfingers der Benutzerhand erfolgt.

Der elektrische Entriegelungstastschalter 44 kann dabei in ähnlicher Weise wie der elektrische Betätigungstastschalter 36 ausgebildet sein. Bei diesem Ausführungsbeispiel gemäß Fig. 1 erfolgt eine Entriegelung oder Entsperrung der Betätigungsvorrichtung 26 beispielsweise durch eine Serienschaltung des Betätigungstastschalters 36 und des Entriegelungstastschalters 44, wobei der Entriegelungstastschalter durch eine Rückstellfeder in einer "Normally-Off" oder Arbeitskontakt-Stellung gehalten wird und bei einem Betätigen den Stromkreis zum Betrieb des Handgeräts 10 bei einem gleichzeitigen Gedrückt-halten des Betätigungstastschalters 36 schließt.

Fig. 2 zeigt ein weiteres Ausführungsbeispiel eines erfindungsgemäßen Handgeräts 10. Hier umfasst die Betätigungsvorrichtung 26 einen Betätigungs-Berührungssensor 46, der durch eine Berührung des Betätigungs-Berührungssensors 46 in einer Richtung quer zur Griffachse B des Griffteils 16 durch einen der Finger der Benutzerhand betätigt wird. Statt einem Betätigungs-Berührungssensor 46 kann jedoch auch bei dem Handgerät 10 aus Fig. 2 für die Betätigungsvorrichtung 26 ein Betätigungstastschalter 36, wie in Fig. 1 und Fig. 5 gezeigt, zum Einsatz kommen.

In Fig. 2 erfolgt die Betätigung wiederum durch einen Zeigefinger und die Entriegelung durch einen Mittelfinger. Die Erfindung soll jedoch nicht auf diese Ausgestaltung beschränkt sein, ist jedoch besonders vorteilhaft. Die Entriegelungsvorrichtung 28 umfasst einen Entriegelungs-Berührungssensor 48, der durch eine Berührung des Entriegelungs-Berührungssensors 48 in einer Richtung entlang der Griffachse B des Griffteils 16 durch einen der Finger der Benutzerhand betätigt wird. Die Entriegelung oder Entsperrung der Betätigungsvorrichtung 26 durch den Entriegelungs-Berührungssensor 48 kann dabei elektronisch erfolgen, wobei eine elektronische Steuereinheit (nicht gezeigt) eine Berührung des Entriegelungs-Berührungssensors 48 beispielsweise kapazitiv erfasst und bei einem Berührungsereignis einen Stromkreis, welcher in Serie mit der Betätigungsvorrichtung 28 geschaltet ist, zum elektrischen Betrieb des Handgeräts 10 freigibt oder schließt.

In Fig. 3 ist schließlich ein mechanischer Entriegelungsvorgang vorgesehen. Hierbei umfasst die Entriegelungsvorrichtung 28 einen mechanischen Entriegelungsmechanismus 50, der durch eine Abstützkraft gegen die Schwerkraft entlang der Griffachse B des Griffteils 16 durch einen der Finger der Benutzerhand die Betätigungsvorrichtung 26 mechanisch entriegelt oder entsperrt.

Der mechanische Entriegelungsmechanismus 50 kann auf unterschiedliche Weisen einen Betätigungstastschalter 36 in seiner Betätigungsrichtung blockieren oder sperren. Hierfür kann der mechanische Entriegelungsmechanismus 50 einen Tastenbereich 52, welcher in Kontakt mit dem entriegelnden Finger tritt, und ein Sperrelement 54 aufweisen, welches durch einen Reibschluss oder Formschluss lösbar eine Bewegung des Betätigungstastschalters erschwert oder verhindert oder zumindest in Betätigungsrichtung blockiert, so dass eine Betätigung des Handgeräts 10 verhindert oder zumindest erschwert wird.

Eine besonders vorteilhafte Ausgestaltung des mechanischen Entriegelungsmechanismus 50 ist in Fig. 5 gezeigt. Hierbei weist der mechanische Entriegelungsmechanismus 50 eine Entriegelungswippe 56 auf, welche durch eine an ihrem ersten Ende 58 verbundene Rückstellfeder 60 in einer Verriegelungsstellung gehalten wird, wobei das zweite Ende 62 der Entriegelungswippe 58 eine Betätigung der Betätigungsvorrichtung 26, in dem in Fig. 5 gezeigten Ausführungsbeispiel des Betätigungstastschalters 36 blockiert.

Dabei ist die Rückstellfeder 60 als Druckfeder ausgebildet, welche in einem Aufnahmevorsprung 58a des ersten Endes 58 der Entriegelungswippe 58 eingreift und sich von einem Bodenbereich eines Federlagers 64 in dem Griffteil 16 abstützt. Das Drehlager 66 der Entriegelungswippe 58 ist ebenfalls fest mit dem Griffteil 16 so verbunden, dass die Entriegelungswippe 58 entgegen der Federkraft der Rückstellfeder 60 aus einer Verriegelungsstellung in eine Entriegelungsstellung schwenken kann. Hierfür ist das zweite Ende 62 der Entriegelungswippe 58 U-förmig ausgebildet, wobei bei einer Entriegelung ein rückseitiger Randbereich des Tastenteils 38 der Betätigungsvorrichtung 26 mittig im U-förmigen Ende 62 der Entriegelungswippe 58 geführt wird, und bei einer Verriegelung der rückseitige Randbereich des Tastenteils 38, welches als Spritzgusshohlteil ausgebildet ist, auf einen Randbereich oder das Sperrelement 54 des U-förmigen Endes 62 der Entriegelungswippe 58 stößt. Das U-förmige Ende 62 der Entriegelungswippe 58 ist dabei so ausgebildet, dass an dem einen Schenkel des U-förmigen Endes 62 der Tastenbereich 52 des mechanischen Entriegelungsmechanismus 50 und an dem anderen Schenkel des U-förmigen Endes 62 das Sperrelement 54 des mechanischen Entriegelungsmechanismus 50 vorgesehen ist. Bei einem Schwenken der Entriegelungswippe 58 aufgrund der Entriegelungskraft durch einen der Finger der Benutzerhand nach oben wird dabei das Sperrelement 54 ebenfalls nach oben geschwenkt, wodurch das als Hohlteil ausgebildete Tastenelement 38 des Betätigungstastschalter nicht mehr durch das Sperrelement 54 blockiert wird und sich in dem Mittelbereich des U-förmigen Endes 62 frei in Betätigungsrichtung bewegen kann.

Wie aus den gesamten Figuren 1 bis 6 hervorgeht, ist sowohl die Betätigungsvorrichtung 26 als auch die Entriegelungsvorrichtung 28 vollkommen symmetrisch oder auch spiegelsymmetrisch bezüglich der durch die Griffachse B und der Längsrichtung A aufgespannten Ebene. Somit sind erfindungsgemäß die Entriegelungsvorrichtung 28 und die Betätigungsvorrichtung 26 so symmetrisch oder spiegelsymmetrisch an dem Griffteil 16 oder dem Gerätekörper 12 vorgesehen, dass eine Entriegelung oder eine Betätigung in gleicher Weise mittels einer rechten oder linken Benutzerhand durchführbar sind. Somit lässt sich das erfindungsgemäße Handgerät 10 in gleicher Weise durch Linkshänder oder Rechtshänder benutzen und entsperren, wobei auch kein Nachteil entsteht bei einem Handwechsel durch einen Benutzer.

Wie in Fig. 5 also gezeigt, wird eine mechanische Verriegelung des Ein-/Ausschalters vorgesehen. Durch die mechanische Blockierung wird ein unbeabsichtigtes Betätigen des Ein-/Ausschalters und damit ein Start des Gerätes verhindert. Die Verriegelung greift hinter das Gehäuse des Ein-/Ausschalters, wenn sie nicht betätigt wird. Wird sie betätigt, ist der Weg freigegeben und der Ein-/Ausschalter kann gedrückt werden. Wenn der Ein-/Ausschalter gedrückt ist, muss die Sicherheitsverriegelung nicht mehr gedrückt werden, sie wird vielmehr in dieser Position gehalten. Die Position der Sicherheitsverriegelung ist so gewählt, dass durch die natürliche Handhaltung am Handgriff die Sicherheitsverriegelung bereits betätigt wird, aber ein versehentliches Betätigen unwahrscheinlich gemacht wird. Somit wird eine intuitive Bedienung ermöglicht. Weiter ist eine zuverlässige mechanische Blockade des Ein-/Ausschalters durch den Entriegelungsmechanismus 50, wie in Fig. 5 gezeigt, vorgesehen. Dieser stellt darüber hinaus eine leichtgängige Bewegung des Entriegelungsmechanismus sicher. Zudem weist der Entriegelungsmechanismus 50 wenig mechanische Teile auf und ist leicht zu montieren. Durch die einfache Montage und die wenigen, im Wesentlichen zwei mechanischen Teile werden die Montage und Herstellung kostenreduziert, während der Nutzwert des Handgerätes 10 erhöht wird.

In Fig. 6 ist eine Ausgestaltung des Handgeräts 10 als Heißluftpistole dargestellt. Hierfür weist das in Fig. 6 dargestellte Handgerät 10 einen langgestreckt ausgebildeten Gerätekörper 12 mit einem Heißluftgebläse 68 auf, an welchem als Werkstückbearbeitungsbereich 14 ein Luftauslass für erwärmte Luft vorgesehen ist.

Diese erwärmte Luft wird erzeugt durch eine Heizeinrichtung 70, durch welche mittels einer Gebläse-Einrichtung 72 durch einen Lufteinlass (nicht gezeigt) angesaugte Luft gebracht wird und aus dem Luftauslass 14 auf eine Betriebstemperatur von bis zu ca. 700 °C erwärmt, austreten kann. Die Betriebstemperatur liegt hierbei bei 300 °C und 500 °C.

Die Gebläse-Einrichtung 72 weist zur Erzeugung des Luftstroms einen Elektromotor 74 und zumindest ein mittels des Elektromotors 74 antreibbares Lüfterrad 76 auf. Der Elektromotor 74 der Gebläse-Einrichtung 72 ist als Bürstenmotor ausgebildet. Eine schematische gezeigte Steuereinheit 78 bewirkt sowohl eine Temperaturregelung als auch eine geeignete Ansteuerung der Heizeinrichtung 70 bzw. Gebläse-Einrichtung 72. Die Steuereinheit 78 ist elektrisch mit der Gebläse-Einrichtung 72 und der Heizeinrichtung 70 verbunden. Die Heizeinrichtung 70 ist dazu ausgebildet, eine konstante Heizleistung im Bereich zwischen 300 W und 1.200 W, vorzugsweise im Bereich zwischen 400 W und 600 W bzw. zwischen 800 W und 1.000 W, insbesondere in Bereichen zwischen 500 W und 600 W bzw. 900 W und 1.000 W zu erzeugen.

Der weitere Betrieb des als Heißluftgebläses ausgestalteten Handgeräts 10 entspricht dem bereits mit Bezug auf die Figuren 1 bis 5 beschriebenen Merkmalen, wobei unterschiedliche Betätigungs- und Entriegelungsmechanismen, wie oben beschrieben, frei miteinander kombiniert werden können. So ist beispielsweise das in Fig. 2 gezeigte Ausführungsbeispiel nicht darauf beschränkt, dass sowohl für die Betätigung als auch für die Entriegelung ein Berührungs-Sensor vorgesehen sein muss.

## Patentansprüche

1. Elektrisches, pistolenartiges Handgerät (10), mit
- einem Gerätekörper (12) zur elektrisch aktivierten Bearbeitung eines Werkstücks,
- einem Griffteil (16), der mit dem Gerätekörper (12) gewinkelt verbunden ist,
- einer Betätigungsvorrichtung (26) zur manuellen Aktivierung und/oder Deaktivierung des Handgeräts (10), die an dem Gerätekörper (12) oder dem Griffteil (16) angeordnet ist, und
- einer Entriegelungsvorrichtung (28) zur manuellen Entriegelung und/oder Verriegelung der Betätigungsvorrichtung (26), **gekennzeichnet durch**
- einen Abstützdorn (30), der von einem Fingergriffbereich (32) des Griffteils (16) nach vorne ragt und an seiner Unterseite die Entriegelungsvorrichtung (28) aufweist, wobei die Entriegelung durch ein Abstützen des Abstützdorns (30) auf einem der Finger der Benutzerhand erfolgt.

2. Handgerät (10) nach Anspruch 1, wobei der Abstützdorn (30) an seiner Unterseite konkav zur zumindest teilweise umschließenden Aufnahme des entriegelnden Fingers entgegen der Schwerkraftrichtung ausgebildet ist.

3. Handgerät (10) nach einem der vorstehenden Ansprüche, wobei die Betätigungsvorrichtung (26) einen elektrischen Betätigungstastschalter (36) umfasst, der durch eine Aktivierungskraft gegen eine Rückstellkraft quer zur Griffachse (B) des Griffteils (16) durch einen der Finger der Benutzerhand betätigt wird.

4. Handgerät (10) nach einem der vorstehenden Ansprüche, wobei die Entriegelungsvorrichtung (28) einen elektrischen Entriegelungstastschalter (44) umfasst, der durch eine Abstützkraft gegen die Schwerkraft entlang der Griffachse (B) des Griffteils (16) durch einen der Finger der Benutzerhand betätigt wird.

5. Handgerät (10) nach einem der Ansprüche 1 oder 2, wobei die Betätigungsvorrichtung (26) einen Betätigungs-Berührungssensor (46) umfasst, der durch eine Berührung des Betätigungs-Berührungssensors (46) in einer Richtung quer zur Griffachse (B) des Griffteils (16) durch einen der Finger der Benutzerhand betätigt wird.

6. Handgerät (10) nach einem der Ansprüche 1 oder 2, wobei die Entriegelungsvorrichtung (28) einen Entriegelungs-Berührungssensor (48) umfasst, der durch eine Berührung des Entriegelungs-Berührungssensors (48) in einer Richtung entlang der Griffachse (B) des Griffteils (16) durch einen der Finger der Benutzerhand betätigt wird.

7. Handgerät (10) nach einem der Ansprüche 1 bis 3, wobei die Entriegelungsvorrichtung (28) einen mechanischen Entriegelungsmechanismus (50) umfasst, der durch eine Abstützkraft gegen die Schwerkraft entlang der Griffachse (B) des Griffteils (16) durch einen der Finger der Benutzerhand die Betätigungsvorrichtung (26) mechanisch entriegelt.

8. Handgerät (10) nach Anspruch 7, wobei der mechanische Entriegelungsmechanismus (50) eine Entriegelungswippe (56) aufweist, welche durch eine an ihrem ersten Ende (58) verbundene Rückstellfeder (60) in einer Verriegelungsstellung gehalten wird, wobei das zweite Ende (62) der Entriegelungswippe (58) eine Betätigung der Betätigungsvorrichtung (26) blockiert.

9. Handgerät (10) nach Anspruch 8, wobei das zweite Ende (62) der Entriegelungswippe (56) U-förmig ausgebildet ist, und wobei bei einer Entriegelung ein Tastenteil (38) der Betätigungsvorrichtung (26) mittig im U-förmigen Ende (62) der Entriegelungswippe (56) geführt wird und bei einer Verriegelung das Tastenteil (38) auf ein Sperrelement (54) am U-förmigen Ende (62) der Entriegelungswippe (56) stößt.

10. Handgerät (10) nach einem der vorstehenden Ansprüche, wobei die Betätigungsvorrichtung (26) so an dem Griffteil (16) oder dem Gerätekörper (12) vorgesehen ist, dass die Betätigung mittels eines Zeigefingers der Benutzerhand erfolgt.

11. Handgerät (10) nach einem der vorstehenden Ansprüche, wobei die Entriegelungsvorrichtung (28) so an dem Griffteil (16) oder dem Gerätekörper (12) vorgesehen ist, dass die Entriegelung mittels eines Mittelfingers der Benutzerhand erfolgt.

12. Handgerät (10) nach einem der vorstehenden Ansprüche, wobei die Entriegelungsvorrichtung (28) und die Betätigungsvorrichtung (26) so symmetrisch an dem Griffteil (16) oder dem Gerätekörper (12) vorgesehen sind, dass eine Entriegelung und eine Betätigung in gleicher Weise mittels einer rechten oder einer linken Benutzerhand durchführbar sind.

13. Handgerät (10) nach einem der vorstehenden Ansprüche, wobei der Griffteil (16) an seinem dem Gerätekörper (12) abgewandten, unteren Ende lösbar mit einem elektrischen Akkumulator-Modul (24) zur Versorgung des Handgeräts (10) mit elektrischer Energie verbindbar ist.

14. Handgerät (10) nach einem der vorstehenden Ansprüche, wobei der Gerätekörper (12) ein Heißluftgebläse (68) aufweist.

## Claims

1. Electric, gun-like handheld device (10), comprising
- a device body (12) for electrically activated working of a workpiece,
- a grip part (16) which is connected at an angle to the device body (12),
- an actuation means (26) for manually activating and/or deactivating the handheld device (10) and which is arranged on the device body (12) or grip part (16), and
- an unlocking means (28) for manually unlocking and/or locking the actuation means (26), **characterised by**
- a support mandrel (30) which projects forwards from a finger grip region (32) of the grip part (16) and comprises the unlocking means (28) on its lower side, wherein the unlocking takes place in that the support mandrel (30) is supported on one of the fingers of the user's hand.

2. Handheld device (10) according to claim 1, wherein the support mandrel (30) is concave on its lower side in order to receive the unlocking finger counter to the direction of gravity in an at least partially enclosing manner.

3. Handheld device (10) according to any of the preceding claims, wherein the actuation means (26) comprises an electric actuation key switch (36) which is actuated by means of an activation force counter to a restoring force transversely to the grip axis (B) of the grip (16) by means of one of the fingers of the user's hand.

4. Handheld device (10) according to any of the preceding claims, wherein the unlocking means (28) comprises an electric unlocking key switch (44) which is actuated by means of a supporting force counter to the force of gravity along the grip axis (B) of the grip part (16) by means of one of the fingers of the user's hand.

5. Handheld device (10) according to any of claims 1 or 2, wherein the actuation means (26) comprises an actuation touch sensor (46) which is actuated in that the actuation touch sensor (46) is touched in a direction transverse to the grip axis (B) of the grip part (16) by means of one of the fingers of the user's hand.

6. Handheld device (10) according to any of claims 1 or 2, wherein the unlocking means (28) comprises an unlocking touch sensor (48) which is actuated in that the unlocking touch sensor (48) is touched in a direction along the grip axis (B) of the grip part (16) by means of one of the fingers of the user's hand.

7. Handheld device (10) according to any of claims 1 to 3, wherein the unlocking means (28) comprises a mechanical unlocking mechanism (50) which mechanically unlocks the actuation means (26) by means of a supporting force counter to the force of gravity along the grip axis (B) of the grip part (16) by means of one of the fingers of the user's hand.

8. Handheld device (10) according to claim 7, wherein the mechanical unlocking mechanism (50) comprises an unlocking rocker (56) which is held in a locked position by means of a return spring (60) that is connected to the first end (58) of said rocker, wherein the second end (62) of the unlocking rocker (58) blocks actuation of the actuation means (26).

9. Handheld device (10) according to claim 8, wherein the second end (62) of the unlocking rocker (56) is U-shaped, and wherein a key part (38) of the actuation means (26) is guided centrally in the U-shaped end (62) of the unlocking rocker (56) during unlocking and the key part (38) strikes a blocking element (54) at the U-shaped end (62) of the unlocking rocker (56) during locking.

10. Handheld device (10) according to any of the preceding claims, wherein the actuation means (26) is provided on the grip part (16) or device body (12) such that the actuation takes place by means of an index finger of the user's hand.

11. Handheld device (10) according to any of the preceding claims, wherein the unlocking device (28) is provided on the grip part (16) or device body (12) such that the unlocking takes place by means of a middle finger of the user's hand.

12. Handheld device (10) according to any of the preceding claims, wherein the unlocking means (28) and the actuation means (26) are provided symmetrically on the grip part (16) or device body (12) such that unlocking and actuation can be carried out in the same way means of the user's right or left hand.

13. Handheld device (10) according to any of the preceding claims, wherein the grip part (16) can be releasably connected at its lower end facing away from the device body (12) to an electric battery module (24) in order to supply the handheld device (10) with electrical energy.

14. Handheld device (10) according to any of the preceding claims, wherein the device body (12) comprises a heat gun (68).

## Revendications

1. Appareil à main électrique de type pistolet (10) comprenant
- un corps d'appareil (12) pour l'usinage activé électriquement d'une pièce à usiner,
- une partie de préhension (16) reliée de manière angulaire au corps de l'appareil (12),
- un dispositif d'actionnement (26) pour l'activation et/ou la désactivation manuelle de l'appareil à main (10), qui est disposé sur le corps d'appareil (12) ou sur la partie de préhension (16), et
- un dispositif de déverrouillage (28) pour le déverrouillage manuel et/ou le verrouillage du dispositif d'actionnement (26), **caractérisé par**
- un mandrin d'appui (30) qui fait saillie vers l'avant à partir d'une zone de préhension des doigts (32) de la partie de préhension (16) et qui présente le dispositif de déverrouillage (28) sur sa face inférieure, le déverrouillage étant effectué par un appui du mandrin d'appui (30) sur l'un des doigts de la main de l'utilisateur.

2. Appareil à main (10) selon la revendication 1, dans lequel le mandrin d'appui (30) est concave sur sa face inférieure pour recevoir le doigt de déverrouillage en l'entourant au moins partiellement dans le sens opposé à la direction de la gravité.

3. Appareil à main (10) selon l'une quelconque des revendications précédentes, dans lequel le dispositif d'actionnement (26) comprend un bouton-poussoir d'actionnement électrique (36) actionné par une force d'activation s'opposant à une force de rappel transversale à l'axe de préhension (B) de la partie de préhension (16) par l'un des doigts de la main de l'utilisateur.

4. Appareil à main (10) selon l'une quelconque des revendications précédentes, dans lequel le dispositif de déverrouillage (28) comprend un bouton-poussoir de déverrouillage électrique (44) actionné par une force d'appui s'opposant à la gravité le long de l'axe de préhension (B) de la partie de préhension (16) par l'un des doigts de la main de l'utilisateur.

5. Appareil à main (10) selon l'une quelconque des revendications 1 ou 2, dans lequel le dispositif d'actionnement (26) comprend un capteur tactile d'actionnement (46) actionné en touchant le capteur tactile d'actionnement (46) dans une direction transversale à l'axe de préhension (B) de la partie de préhension (16) au moyen de l'un des doigts de la main de l'utilisateur.

6. Appareil à main (10) selon l'une des revendications 1 ou 2, dans lequel le dispositif de déverrouillage (28) comprend un capteur tactile de déverrouillage (48) actionné en touchant le capteur tactile de déverrouillage (48) dans une direction le long de l'axe de préhension (B) de la partie de préhension (16) au moyen de l'un des doigts de la main de l'utilisateur.

7. Appareil à main (10) selon l'une des revendications 1 à 3, dans lequel le dispositif de déverrouillage (28) comprend un mécanisme de déverrouillage mécanique (50) qui déverrouille mécaniquement le dispositif d'actionnement par une force d'appui contre la gravité le long de l'axe de préhension (B) de la partie de préhension (16) au moyen de l'un des doigts de la main de l'utilisateur.

8. Appareil à main (10) selon la revendication 7, dans lequel le mécanisme de déverrouillage (50) mécanique comporte une bascule de déverrouillage (56) maintenue dans une position de verrouillage par un ressort de rappel (60) relié à sa première extrémité (58), la deuxième extrémité (62) de la bascule de déverrouillage (58) bloquant un actionnement du dispositif d'actionnement (26).

9. Appareil à main (10) selon la revendication 8, dans lequel la deuxième extrémité (62) de la bascule de déverrouillage (56) est réalisée en forme de U et dans lequel, lors d'un déverrouillage, une partie de touche (38) du dispositif d'actionnement (26) est guidée au centre dans l'extrémité en forme de U (62) de la bascule de déverrouillage (56) et, lors d'un verrouillage, la partie de touche (38) vient buter contre un élément de blocage (54) sur l'extrémité en forme de U (62) de la bascule de déverrouillage (56).

10. Appareil à main (10) selon l'une quelconque des revendications précédentes, dans lequel le dispositif d'actionnement (26) est prévu sur la partie de préhension (16) ou sur le corps de l'appareil (12) de manière à ce que l'actionnement se fasse au moyen d'un index de la main de l'utilisateur.

11. Appareil à main (10) selon l'une quelconque des revendications précédentes, dans lequel le dispositif de déverrouillage (28) est prévu sur la partie de préhension (16) ou sur le corps de l'appareil (12) de manière à ce que le déverrouillage se fasse au moyen d'un majeur de la main de l'utilisateur.

12. Appareil à main (10) selon l'une quelconque des revendications précédentes, dans lequel le dispositif de déverrouillage (28) et le dispositif d'actionnement (26) sont prévus symétriquement sur la partie de préhension (16) ou sur le corps de l'appareil (12) de telle sorte qu'un déverrouillage et un actionnement peuvent être réalisés de la même manière au moyen d'une main droite ou d'une main gauche de l'utilisateur.

13. Appareil à main (10) selon l'une quelconque des revendications précédentes, dans lequel la partie de préhension (16) peut être reliée en énergie électrique de manière amovible, à son extrémité inférieure opposée au corps de l'appareil (12), à un module d'accumulateur électrique (24) pour l'alimentation de l'appareil à main (10).

14. Appareil à main (10) selon l'une quelconque des revendications précédentes, dans lequel le corps de l'appareil (12) comporte une soufflerie d'air chaud (68).
